# EUROPEAN PATENT SPECIFICATION

(11) **EP 1 524 064 B1**
(45) Date of publication and mention of the grant of the patent: **14.07.2010**
(21) Application number: 04256366.8
(22) Date of filing: 15.10.2004
(51) Int. Cl.: B23K 33/00, B61D 17/04

(54) **Structural body of railway car and joint structure for friction stir welding**
Wagenkastenstruktur eines Schienenfahrzeugs und Verbindungsstruktur zum Reibschweissen
Caisse structurelle d'un véhicule ferroviaire et structure d'interconnexion pour le soudage par friction à mouvement cyclique

(30) Priority: 17.10.2003 JP 2003357266; 23.02.2004 JP 2004046171
(43) Date of publication of application: 20.04.2005
(73) Proprietor: Hitachi, Ltd., Tokyo (JP)
(72) Inventor: Nakamura, Hideyuki, c/o Hitachi Ltd. Intell.Prop., Chiyoda-ku Tokyo 100-8220 (JP); Fukuyori, Kazushige, c/o Hitachi Kasado, Kudamatsu-shi Yamaguchi 744-0002 (JP)
(74) Representative: Paget, Hugh Charles Edward

(56) References cited:
- US-A1- 2001 006 710
- US-A1- 2002 081 148
- US-A1- 2003 056 459

## Description

### BACKGROUND OF THE INVENTION

### Field of the invention

The present invention relates to a structural body of a railway car formed by joining extruded shape members or hollow shape members via friction stir welding, and further relates to a joint structure for friction stir welding suitable for application to the structural body of a railway car.

### Description of the related art

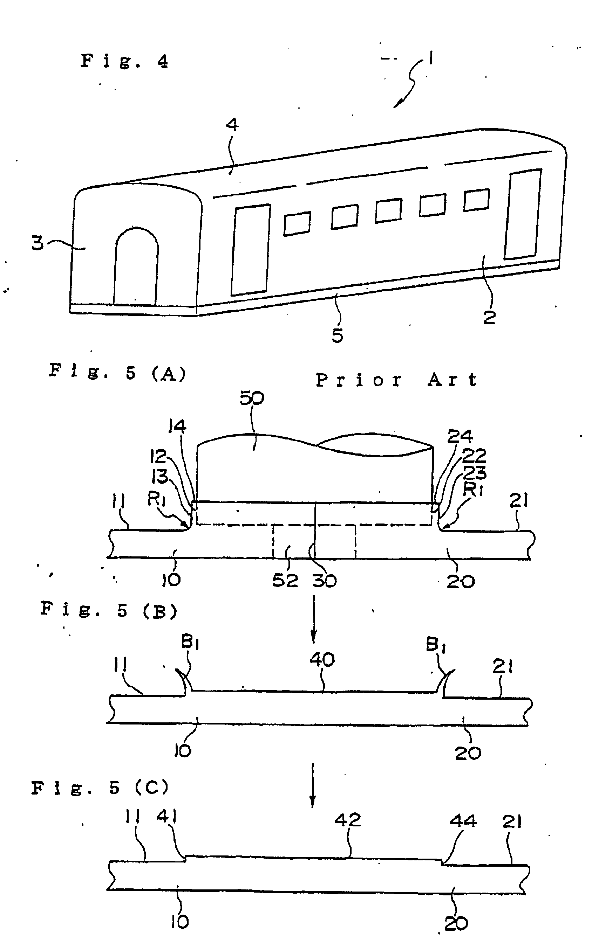

In general, the car body of a railway car, that is, the structural body of a railway car is structured as illustrated in FIG. 4. In FIG. 4, a structural body 1 of a railway car is composed of side constructions 2 corresponding to both side walls of the structural body, end constructions 3 corresponding to the ends in the traveling direction of the car body, a roof construction 4 corresponding to the upper surface thereof, and an underframe 5 corresponding to the lower surface thereof. In recent years, such a structural body 1 of a railway car is mainly formed using extruded shape members made of aluminum alloy, wherein plural extruded shape members are joined together by friction stir welding. Each extruded shape member forming the structural body of the railway car is composed of a flat panel portion constituting the outer surface of the car body and a rib functioning as a reinforcement member for the flat panel portion. Further, each extruded shape member is formed in a flat-panel shape, but it is also possible to adopt a hollow extruded shape member in which two flat panels are connected via trusses.

The art of forming a structural body of a railway car via friction stir welding is disclosed, for example, in Japanese Patent Publication Laid-Open No. 11-314173, in accordance with the preambles of claims 1 to 4 and 5 and 6.

FIGS. 5(A) through 5(C) are explanatory views showing a joint structure for friction stir welding according to the prior art.

Two extruded shape members 10 and 20 to be joined together by friction stir welding are disposed with their joining ends butted against one another to form a joining surface 30 of a joint portion.

At the joining end of a first extruded shape member 10 is formed a protrusion 12 that projects from the upper surface of the extruded shape member 10 toward the direction from which a tool 50 for friction stir welding is to be inserted.

An upper surface 14 of the protrusion 12 is formed as a flat plane, and a side surface 13 of the protrusion 12 is connected to the upper surface 11 of the flat panel portion of the extruded shape member 10 via a small arc R₁.

Similarly, a protrusion 22 is formed to the joining end of a second extruded shape member 20 that projects from the upper surface 21 of the flat panel portion. The upper surface 24 of the protrusion 22 is also formed as a flat plane, and the side surface 23 of the protrusion 22 is connected to the upper surface 21 of the flat panel portion of the extruded shape member 20 via a connecting portion having a small arc R₁.

The friction stir welding tool 50 has a small diameter portion 52 at an end thereof, the center of the small diameter portion 52 being positioned to correspond to the joining surface 30 when carrying out friction stir welding (FIG. 5(A)).

The joint portion of the extruded members 10 and 20 being welded together has a flat surface 40 formed as the upper surface, and weld flashes B₁ remain on both sides of the flat surface 40 (FIG. 5(B)) . The weld flashes B₁ are then cut and removed to finish the formation of the joint portion (FIG. 5(C)).

The upper surface 42 of the joint portion is projected than the upper surfaces 11 and 21 of the two extruded shape members 10 and 20 being joined together, by which a stepped portion is formed.

This stepped portion constitutes a notch 41.

In such a joint portion, it is advantageous to increase the plate thickness compared to that of the flat panel portion, so as to compensate for the deterioration of strength at the joining portion. That is, the plate thickness of the flat panel portion of the extruded shape member should be reduced as much as possible in order to reduce the weight of the structural body of the railway car while assuring necessary strength. Therefore, if the plate thickness of the joining ends of the extruded shape members is the same as the plate thickness of the flat panel portion, it may not be possible to ensure sufficient strength due to the deterioration in strength at the joints. Therefore, it is considerable to increase the plate thickness at the joint portion compared to the plate thickness at the flat panel portion. Therefore, as shown in FIG. 5 (B), in removing the weld flashes B₁ at the joint portion, portions of the protrusions 12 and 22 are left remaining to assure the plate thickness of the joint portion as shown in FIG. 5(C). However, the notch 41 of the protrusion remaining on the joint portion may cause stress concentration to occur when flexural stress or the like is applied to the extruded shape members 10 and 20.

### SUMMARY OF THE INVENTION

The object of the present invention is to provide a structural body of a railway car and a joint structure for friction stir welding suitably applied to the structural body of a railway car, that solve the problems mentioned above.

In order to achieve the object, the structural body of a railway car and the joint structure for friction stir welding according to the present invention are defined by the features of claims 1 to 4 and 5 and 6 comprise, as basic components, a protrusion that projects from the upper surface of the flat panel portion of the extruded shape member toward the direction from which a tool for friction stir welding is to be inserted, and a connecting portion formed between a side surface of the protrusion and the upper surface of the extruded shape member composed of an arc having a relatively large curvature formed to the surface of the extruded shape member and an arc having a relatively small curvature (smaller than the large curvature) formed near the side surface of the protrusion, wherein the extruded shape members are used as outer panels of the structural body of the railway car with the side provided with the protrusions of the shape members disposed to face the inner side of the car body. "Curvature" here means "radius of curvature".

According to the present invention, a structural body of a railway car formed by joining plural extruded shape members via friction stir welding characterizes in that each extruded shape member subjected to friction stir welding formed of a flat panel and a rib; a protrusion is formed to a joining end of the flat panel, the protrusion projecting from an upper surface of the flat panel toward a direction from which a friction stir welding tool is to be inserted; a connecting portion is formed between a side surface of the protrusion and the upper surface of the flat panel, the connecting portion composed of an arc with a relatively large curvature formed near the upper surface of the flat panel and an arc with a relatively small curvature (smaller than the large curvature) formed near the side surface of the protrusion; wherein the extruded shape members are used as outer panels of the structural body of a railway car with the side of the extruded shape members having the protrusion facing an inner side of the car body.

According further to the present invention, a structural body of a railway car formed by joining plural extruded shape members via friction stir welding characterizes in that each extruded shape member subjected to friction stir welding is formed of a flat panel and a rib; a protrusion is formed to a joining end of the flat panel, the protrusion projecting from an upper surface of the flat panel toward a direction from which a friction stir welding tool is to be inserted; a connecting portion is formed between a side surface of the protrusion and the upper surface of the flat panel, the connecting portion composed of an ellipse; wherein the extruded shape members are used as outer panels of the structural body of a railway car with the side of the extruded shape members having the protrusion facing an inner side of the car body.

According to another aspect of the present invention, a structural body of a railway car formedby joining plural extruded hollow shape members via friction stir welding characterizes in that each extruded hollow shape member subj ected to friction stir welding is formed of two flat panels andtrusses; aprotrusion is formed to a joining end of at least one of the two flat panels, the protrusion projecting from an upper surface of the flat panel toward a direction from which a friction stir welding tool is to be inserted; a connecting portion is formed between a side surface of the protrusion and the upper surface of the flat panel, the connecting portion composed of an arc with a large curvature formed near the upper surface of the flat panel and an arc with a small curvature formed near the side surface of the projection; wherein the extrudedhollow shape members are used as outer panels of the structural body of a railway car with the side having the protrusion facing an inner side of the car body.

According to yet another aspect of the present invention, a structural body of a railway car formed by joining plural extruded hollow shape members via friction stir welding characterizes in that each extrudedhollow shape member subj ected to friction stir welding is formedof two flat panels and trusses; a protrusion is formed to a joining end of at least one of the two flat panels, the protrusion proj ecting from an upper surface of the flat panel toward a direction from which a friction stir welding tool is to be inserted; a connecting portion formed between a side surface of the protrusion and the upper surface of the flat panel, the connecting portion composed of an ellipse; wherein the extruded hollow shape members are used as outer panels of the structural body of a railway car with the side having the protrusion facing an inner side of the car body.

According to the present invention, a joint structure for friction stir welding suitably applied to the structural body of a railway car and formed to an end of an extruded shape member to be subjected to friction stir welding comprises a protrusion projecting from an upper surface of the extruded shape member toward a direction from which a friction stir welding tool is to be inserted; and a connecting portion formed between a side surface of the protrusion and the upper surface of the extruded shape member, the connecting portion composed of an arc with a large curvature formed near the upper surface of the extruded shape member and an arc with a small curvature formed near the side surface of the projection.

Furthermore, a joint structure for friction stir welding suitably applied to the structural body of a railway car and formed to an end of an extruded shape member to be subjected to friction stir welding comprises a protrusion projecting from an upper surface of the extruded shape member toward a direction from which a friction stir welding tool is to be inserted; and a connecting portion formed between a side surface of the protrusion and the upper surface of the extruded shape member, the connecting portion formed of an ellipse.

Furthermore, the above-mentioned extruded shape member is a hollow shape member of a structural body of a car having a structure in which two flat panels are connected via trusses, and at least the joint structure for friction stir welding disposed on the inner side of the car body is equipped with a connecting portion.

Since the structural body of a railway car and the joint structure for friction stir welding according to the present invention comprises the above features, it is possible to assure a sufficient plate thickness at the joint portion, and the height di fferences between the j oining surface from which the weld flash generated during friction stir welding is removed and the upper surface of the extruded shape member are connected via an are having a large curvature. Therefore, the present structure enables to prevent concentration of stress to the area with the height differences.

### BRIEF DESCRIPTION OF THE DRAWINGS

FIG. 1 is an explanatory view showing embodiment 1 of the present invention;
FIG. 2 is an explanatory view showing embodiment 2 of the present invention;
FIG. 3 is an explanatory view showing embodiment 3 of the present invention;
FIG. 4 is an explanatory view of a structural body of a railway car; and
FIG. 5 is an explanatory view of a joint structure according to the prior art.

### DETAILED DESCRIPTION OF THE PREFERRED EMBODIMENTS

The embodiments of the present invention will now be explained with reference to the drawings.

### [Embodiment 1]

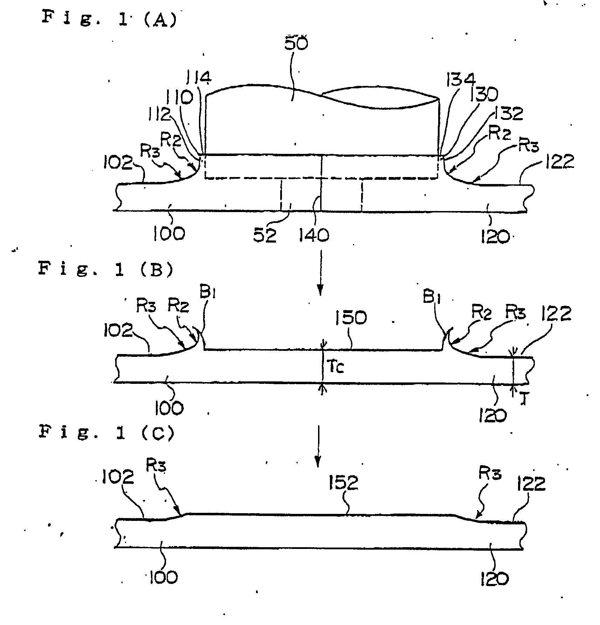

FIGS. 1(A) through 1(C) are explanatory views illustrating embodiment 1 of the present invention.

Two extruded shape members 100 and 120 to be joined via friction stir welding are placed so that joining ends thereof are butted against one another, forming a joining surface 140 of the joint portion.

A joining end of the first extruded shape member 100 is provided with a protrusion 110 formed to protrude from an upper surface of a flat panel portion of the extruded shape member 100 toward the direction from which a tool 50 for friction stir welding is to be inserted.

The upper surface 114 of the protrusion 110 is formed as a flat surface, and a side surface 112 of the protrusion 110 is connected to the upper surface 102 of the flat panel portion of the extruded shape member 100 via a connecting portion having a first arc R₂ and a second arc R₃. The first arc R₂ has a small curvature and the second arc R₃ has a large curvature.

Similarly, a joining end of the second extruded shape member 120 is provided with a protrusion 130 formed to protrude from an upper surface of a flat panel portion of the extruded shape member 120 toward the direction from which a tool 50 for friction stir welding is to be inserted.

The upper surface 134 of the protrusion 130 is formed as a flat surface, and a side surface 132 of the protrusion 130 is connected to the upper surface 122 of the flat panel portion of the extruded shape member 120 via a connecting portion having a first arc R₂ and a second arc R₃. The first arc R₂ has a small curvature and the second arc R₃ has a large curvature. These extruded shape members 100 and 120 are used as the outer panels of the structural body of the railway car, with the side having the protrusions 110 and 130 disposed to face the inner side of the car body.

The friction stir welding tool 50 has a small diameter portion 52 formed at an end thereof, and the center of the small diameter portion 52 is placed to correspond to the joining surface 140 when performing friction stir welding (FIG. 1(B)).

The joint portion formed between the extruded shape members 100 and 120 being joined has a flat surface 150 formed to the upper surface thereof and weld flashes B₁ formed at both ends of the flat surface 150. The weld flashes B₁ are cut and removed, and a joint portion is completed (FIG. 1(C)).

When utilizing the extruded shape members 100 and 120 as the outer panels of the structural body of the railway car, the surface having the protrusions 110 and 130 is disposed to face the inner side of the car body. The plate thickness T excluding the joining portion between the extruded shape members 100 and 120 is set to a predetermined thickness to ensure necessary strength as the outer panel of the structural body of the railway car. This plate thickness T must be thick enough to ensure a plate thickness Tc of a joining portion determined considering the strength deterioration of the portion being subjected to friction stir welding, so if the flat surface having no protrusions 110 and 130 formed is disposed as the outer surface of the car body, the thickness T must be thicker than the thickness required to ensure the necessary strength as the outer plate. However, as shown in FIG. 1(C) , by shaping protrusions 110 and 130 while leaving the portion corresponding to arc R₃ to remain, the plate thickness required to compensate for the deterioration of strength at the joining portion can be reservedby this portion. Therefore, the plate thickness T excluding the joining portion can be set to the thickness required to ensure necessary strength as the outer panel of the structural body of the railway car, and so it is possible to reduce the weight of the extruded shape members 100 and 120. In other words, the weight of the whole structural body of the railway car can be cut down. If the appearance of the surface disposed as the outer side of the car body corresponding to the friction stir welded portion is not good when the surface having protrusions 110 and 130 of the extruded shape members 100 and 120 is positioned to face the inner side of the car body, it may be possible to provide protrusions having small heights to the surface of the extruded shape members 100 and 120 opposite to the surface having protrusions 110 and 130, which is the surface disposed as the outer side of the car body, and to remove the protruded portions after completing welding to create a smooth finished surface.

According to the structure described above, the plate thickness Tc at the joining portion is finished so that the arc R₃ of protrusions 110 and 130 are left remaining, so that sufficient plate thickness Tc can be ensured without causing any stress concentration. Therefore, since it is not necessary to set the plate thickness T excluding the joining portions of the extruded shape members 100 and 130 to a thickness more than what is required as the outer panel of the structural member of the railway car, it becomes possible to reduce the overall weight of the structural body of the railway car.

### [Embodiment 2]

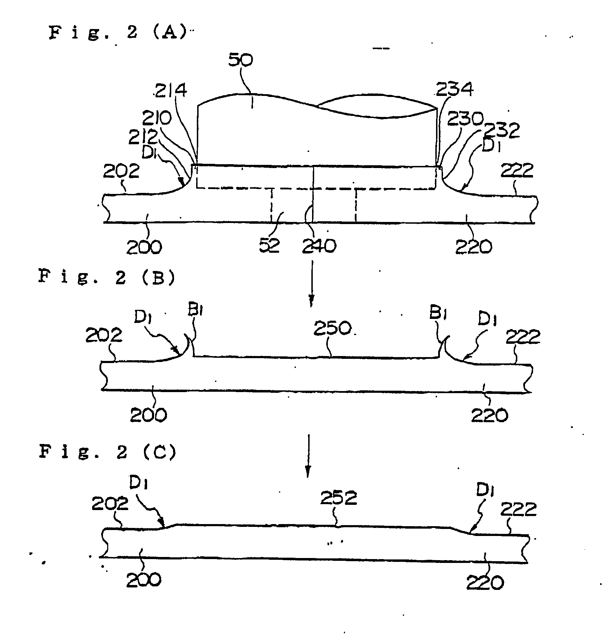

FIGS. 2(A) through 2(C) are explanatory views illustrating embodiment 2 of the present invention.

The two extruded shape members 200 and 220 to be joined via friction stir welding are placed so that joining ends thereof are butted against one another, forming a joining surface 240 of the joint portion.

A joining end of the first extruded shape member 200 is provided with a protrusion 210 formed to protrude from an upper surface of a flat panel portion of the extruded shape member 200 toward the direction from which a tool 50 for friction stir welding is to be inserted.

The upper surface 214 of the protrusion 210 is formed as a flat surface, and a side surface 212 of the protrusion 210 is connected to the upper surface 202 of the flat panel portion of the extruded shape member 200 via a connecting portion composed of a portion of an ellipse D₁. The portion of an ellipse D₁ is formed so that the portion near the flat panel has a large curvature and the portion near the side surface 212 of the protrusion 210 has a small curvature.

Similarly, a joining end of the second extruded shape member 220 is provided with a protrusion 230 formed to protrude from an upper surface of a flat panel portion of the extruded shape member 220 toward the direction from which a tool 50 for friction stir welding is to be inserted.

The upper surface 234 of the protrusion 230 is formed as a flat surface, and a side surface 232 of the protrusion 230 is connected to the upper surface 222 of the flat panel portion of the extruded shape member 220 via a connecting portion composed of a portion of an ellipse D₁. The portion of an ellipse D₁ is formed so that the portion near the flat panel has a large curvature and the portion near the side surface 212 of the protrusion 210 has a small curvature.

These extruded shape members 200 and 220 are used as the outer panels of the structural body of the railway car, with the side having the protrusions 210 and 230 disposed to face the inner side of the car body.

The friction stir welding tool 50 has a small diameter portion 52 formed at an end thereof, and the center of the small diameter portion 52 is placed to correspond to the joining surface 240 when performing friction stir welding (FIG. 2(B)).

The joint portion formed between the extruded shape members 200 and 220 being joined has a flat surface 250 formed as the upper surface and weld flashes B₁ formed at both ends of the flat surface 250. The weld flashes B₁ are cut and removed, and the formation of a joint portion is completed (FIG. 2(C)).

According to the structure described above, the plate thickness at the joining portion is finished so that the portions of an ellipse D₁ formed to the protrusions 210 and 230 are left to remain, so that sufficient plate thickness can be ensured without causing any stress concentration. Therefore, since it is not necessary to set the thickness of the plate thickness T excluding the joining portions of the extruded shape members 200 and 230 to more than what is required as the outer panel of the structural member of the railway car, it becomes possible to reduce the weight of the entire structural body of the railway car.

### [Embodiment 3]

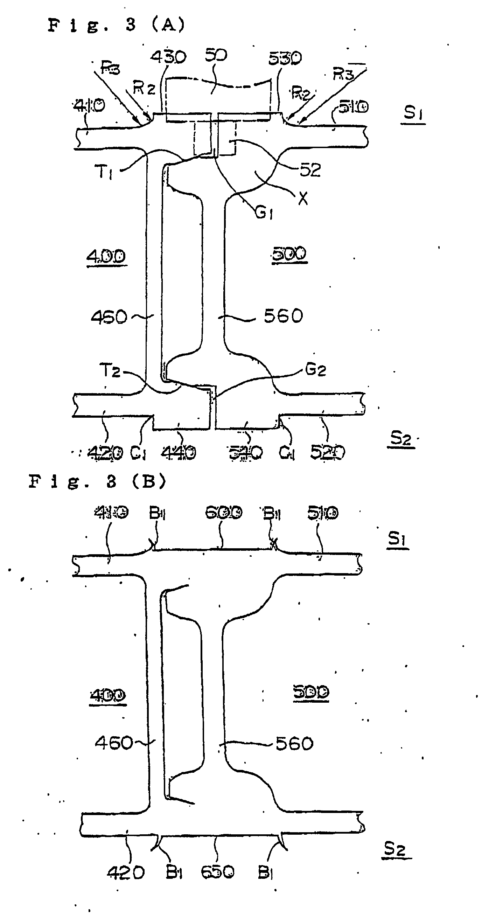

FIGS. 3(A) through 3(D) illustrate embodiment 3 of the present invention.

The present embodiment illustrates an example for forming a side construction of a railway car using hollow shape members made of aluminum alloy.

A first hollow extruded shape member 400 constituting a joint portion is structured so that its cross-sectional shape is hollow, having two parallel flat panels 410 and 420 connected via trusses 460.

A second hollow extruded shape member 500 is also structured so that its cross-sectional shape is hollow, having two parallel flat panels 510 and 520 connected via trusses 560.

A first flat panel 410 of the first hollow extruded shape member 400 is disposed to face an inner side S₁ of the railway car body, with a protrusion 430 formed at the joining end thereof. A connecting portion between the protrusion 430 and the first flat panel 410 is composed of an arc R₂ having a small curvature and an arc R₃ having a large curvature, as explained in embodiment 1.

Similarly, a first flat panel 510 of the second hollow extruded shape member 500 is disposed to face an inner side S₁ of the railway car body, with a protrusion 530 formed at the joining end thereof. A connecting portion between the protrusion 530 and the first flat panel 510 is composed of an are R₂ having a small curvature and an are R₃ having a large curvature, as explained in embodiment 1.

A second flat panel 420 of the first hollow extruded shape member 400 is disposed to face an outer side S₂ of the railway car body, with a protrusion 440 formed at the joining end thereof. The protrusion 440 and the flat panel 420 are connected via a corner portion C₁.

A second flat panel 520 of the second hollow extruded shape member 500 is disposed to face an outer side S₂ of the railway car body, with a protrusion 540 formed at the joining end thereof. The protrusion 540 and the flat panel 520 are connected via a corner portion C₂.

The end portions of the first hollow extruded shape member 400 and the second hollow extruded shape member 500 are engaged with one another via tapered surfaces T₁ and T₂.

Thus, gaps G₁ and G₂ are formed to butted portions between the first hollow member 400 and the second hollow member 500.

Friction stir welding is carried out having the center of the small diameter portion 52 of the friction stir welding tool 50 placed to substantially correspond to the center of gaps G₁ and G₂.

During welding, the pressing force applied by the friction stir welding tool is mainly received by a truss 560 having high rigidity of the second hollow extruded shape member.

FIG. 3(B) illustrates a state in which a joint surface 600 facing the inner side S₁ of the car body and a joint surface 650 facing the outer side S₂ of the car body are joined by friction stir welding.

Weld flashes B₁ are formed on both sides of joint surfaces 600 and 650.

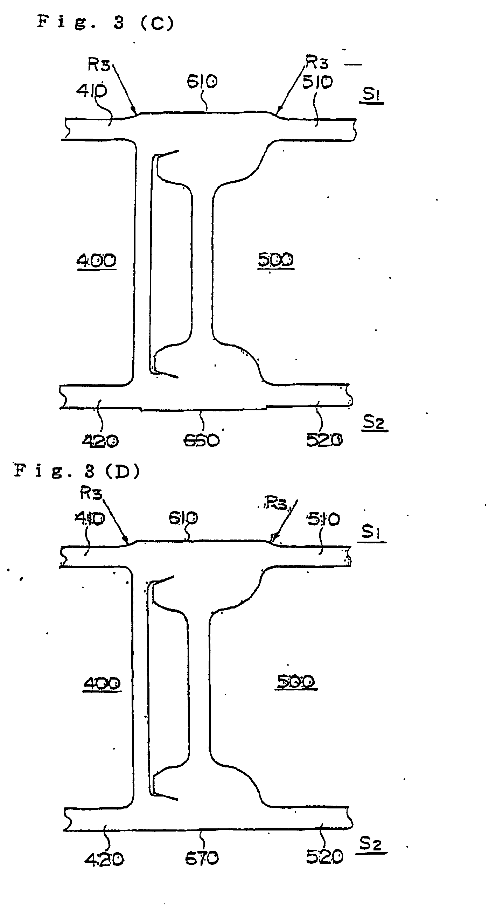

FIG. 3(C) illustrates a state in which the weld flashes are removed through processing performed to the joint surface 600 facing the inner side S₁ of the car, thereby finishing a joint surface 610.

The joint surface 610 constitutes a surface projected from the flat panel 410 of the first hollow extruded shape member and the flat panel 510 of the second hollow extruded shape member, similar to embodiment 1, and the connecting portion is connected via an arc R₃ having a large curvature, so that there will be no stress concentration. Since an interior decoration is applied to the side construction facing the inner side S₁ of the car, there is no problem even if the joint surface 610 remains protruded. Moreover, since the joint surface 610 forms a surface projected from the flat panel 410 of the first extruded hollow shape member and the flat panel 510 of the second extruded hollow shape member, it becomes possible to ensure a sufficient plate thickness at the joints, and thus there is no need to increase the thickness of the flat panels 410 and 510, so the weight of the entire structural body of the railway car can be reduced advantageously.

FIG. 3(D) illustrates a state in which the joint surface 660 facing the outer side S₂ of the car is processed to complete a joint surface 670 forming the same plane as the flat panel 420 of the first hollow extruded shape member and the flat panel 520 of the second hollow extruded shape member.

Since the outer side S₂ of the car body is finished as a flat plane, stress concentration will not occur, and a side construction having an improved appearance can be obtained.

Further, it is of course possible to apply the ellipse-shaped connection described in embodiment 2 to the protrusion of the joint surface facing the inner side S₁ of the car.

## Claims

1. A structural body of a railway car formed by joining plural extruded shape members via friction stirwelding, wherein:
the extruded shape members (100,120) are used as outer panels of the structural body of a railway car with the surface of the extruded shape members having the protrusion facing an inner side of the car body
each extruded shape member (100,120) subjected to friction stir welding is formed of a flat panel and a rib;
a protrusion (110,130) is formed to a joining end of the flat panel, the protrusion (110,130) projecting from an upper surface (102,122) of the flat panel toward a direction from which a friction stir welding tool (50) is to be inserted; **characterized in that**
a connecting portion is formed between a side surface (112,132) of the protrusion (110,130) and the upper surface of the flat panels, the connecting portion composed of an arc with a large curvature (R3) formed near the upper surface of the flat panel and an arc with a small curvature (R2), which is smaller than the large curvative, formed near the side surface of the protrusion.

2. A structural body of a railway car formed by joining plural extruded shapemembers via friction stirwelding, wherein:
the extruded shape members are used as outer panels of the structural body of a railway car with the surface of the extruded shape members having the protrusion facing an inner side of the car body
each extruded shape member (200,220) subjected to friction stir welding is formed of a flat panel and a rib;
a protrusion (210,230) is formed to a joining end of the flat panel, the protrusion (210,230) projecting from an upper surface of the flat panel toward a direction from which a friction stir welding tool (50) is to be inserted; **characterized in that**
a connecting portion is formed between a side surface (212,232) of the protrusion (210,230) and the upper surface of the flat panel, the connecting portion composed of an ellipse.

3. A structural body of a railway car formed by joining plural extruded hollow shape members via friction stir welding, wherein:
the extruded hollow shape members are used as outer panels of the structural body of a railway car with the surface having the protrusion facing an inner side of the car body
each extruded hollow shape member (400,500) subjected to friction stir welding is formed of two flat panels and trusses;
a protrusion (430,530) is formed to a joining end of at least one of the two flat panels, the protrusion (430,530) projecting from an upper surface of the flat panel toward a direction from which a friction stir welding tool (50) is to be inserted; **characterized in that**
a connecting portion is formed between a side surface of the protrusion and the upper surface of the flat panel, the connecting portion composed of an arc with a large curvature (R3) formed near the upper surface of the flat panel and an arc with a small curvature (R2), which is smaller than the large curvature, formed near the side surface of the projection.

4. A structural body of a railway car formed by joining plural extruded hollow shape members via friction stir welding, wherein:
the extruded hollow shape members are used as outer panels of the structural body of a railway car with the surface having the protrusion facing an inner side of the car body
each extruded hollow shape member (400,500) subjected to friction stir welding is formed of two flat panels and trusses;
a protrusion (430,530) is formed to a joining end of at least one of the two flat panels, the protrusion (430,530) projecting from an upper surface of the flat panel toward a direction from which a friction stir welding tool (50) is to be inserted; **characterized in that**
a connecting portion is formed between a side surface of the protrusion and the upper surface of the flat panel, the connecting portion composed of an ellipse.

5. A joint structure for friction stir welding formed to an end of an extruded shape member (100,120) to be subjected to friction stir welding, the joint structure comprising:
a protrusion (110,130) projecting from an upper surface of the extruded shape member toward a direction from which a friction stir welding tool is to be inserted; and **characterized in**
a connecting portion formed between a side surface of the protrusion (110,130) and the upper surface of the extruded shape member (100,120); the connecting portion composed of an arc with a large curvature (R3) formed near the upper surface of the extruded shape member and an arc with a small curvature (R2), which is smaller than the large curvature, formed near the side surface of the projection.

6. A joint structure for friction stir welding disposed to ends of extruded shape members (200,220) to be subjected to friction stir welding, the joint structure comprising:
a protrusion (210,230) projecting from an upper surface of the extruded shape member (200,220) toward a direction fromwhich a friction stir welding tool is to be inserted; and **characterized in**
a connecting portion formed between a side surface of the protrusion (210,230) and the upper surface of the extruded shape member (200,220) the connecting portion composed of an ellipse.

7. The joint structure for friction stir welding according to claim 5 or claim 6, wherein the extruded shape member (100,130) is a flat panel.

8. The joint structure for friction stir welding according to claim 5 or claim 6, wherein the extruded shape member (200,220) is a hollow shape member having a structure in which two flat panels are connected via trusses.

9. The joint structure for friction stir welding having the connecting portion according to claim 5 or claim 6, wherein the extruded shape member (200,220) is a hollow shape member for a structural body of a car having a structure in which two flat panels are connected via trusses.

## Patentansprüche

1. Strukturkörper eines Schienenwagens, der durch Verbinden mehrerer stranggepresster Formelemente durch Rührreibschweißen gebildet ist, wobei
die stranggepressten Formelemente (100, 120) als Außenwände des Schienenwagenstrukturkörpers verwendet werden, wobei die einen Vorsprung aufweisende Fläche der stranggepressten Formelemente einer Innenseite des Wagenkörpers gegenüberliegt,
jedes Rührreibschweißen unterzogene stranggepresste Formelement (100, 120) aus einer flachen Platte und einer Rippe gebildet ist,
der Vorsprung (110, 130) an einem Verbindungsende der flachen Platte gebildet ist, wobei der Vorsprung (110, 130) von einer oberen Fläche (102, 122) der flachen Platte in eine Richtung hervorragt, von der ein Rührreibschweißwerkzeug (50) einzuführen ist,
**dadurch gekennzeichnet, dass** ein Verbindungsabschnitt zwischen einer Seitenfläche (112, 132) des Vorsprungs (110, 130) und der oberen Fläche der flachen Platte gebildet ist, wobei der Verbindungsabschnitt zusammengesetzt ist aus einem Bogen mit großer Krümmung (R3), der in der Nähe der oberen Fläche der flachen Platte gebildet ist, und einem Bogen mit kleiner Krümmung (R2), die kleiner ist als die große Krümmung, der in der Nähe der Seitenfläche des Vorsprungs gebildet ist.

2. Strukturkörper eines Schienenwagens, der durch Verbinden mehrerer stranggepresster Formelemente durch Rührreibschweißen gebildet ist, wobei
die stranggepressten Formelemente als Außenwände des Schienenwagenstrukturkörpers verwendet werden, wobei die einen Vorsprung aufweisende Fläche der stranggepressten Formelemente einer Innenseite des Wagenkörpers gegenüberliegt,
jedes Rührreibschweißen unterzogene stranggepresste Formelement (200, 220) aus einer flachen Platte und einer Rippe gebildet ist,
der Vorsprung (210, 230) an einem Verbindungsende der flachen Platte gebildet ist, wobei der Vorsprung (210, 230) von einer oberen Fläche der flachen Platte in eine Richtung hervorragt, von der ein Rührreibschweißwerkzeug (50) einzuführen ist,
**dadurch gekennzeichnet, dass** zwischen einer Seitenfläche (212, 232) des Vorsprungs (210, 230) und der oberen Fläche der flachen Platte ein aus einer Ellipse zusammengesetzter Verbindungsabschnitt gebildet ist.

3. Strukturkörper eines Schienenwagens, der durch Verbinden mehrerer stranggepresster hohler Formelemente durch Rührreibschweißen gebildet ist, wobei
die stranggepressten hohlen Formelemente als Außenwände des Schienenwagenstrukturkörpers verwendet werden, wobei die einen Vorsprung aufweisende Fläche einer Innenseite des Wagenkörpers gegenüberliegt,
jedes Rührreibschweißen unterzogene stranggepresste hohle Formelement (400, 500) aus zwei flachen Platten und Streben gebildet ist,
der Vorsprung (430, 530) an einem Verbindungsende wenigstens einer der zwei flachen Platten gebildet ist, wobei der Vorsprung (430, 530) von einer oberen Fläche der flachen Platte in eine Richtung hervorragt, von der ein Rührreibschweißwerkzeug (50) einzuführen ist,
**dadurch gekennzeichnet, dass** zwischen einer Seitenfläche des Vorsprungs und der oberen Fläche der flachen Platte ein Verbindungsabschnitt gebildet ist, der zusammengesetzt ist aus einem Bogen mit großer Krümmung (R3), der in der Nähe der oberen Fläche der flachen Platte gebildet ist, und einem Bogen mit kleiner Krümmung (R2), die kleiner ist als die große Krümmung, der in der Nähe der Seitenfläche des Vorsprungs gebildet ist.

4. Strukturkörper eines Schienenwagens, der durch Verbinden mehrerer stranggepresster hohler Formelemente durch Rührreibschweißen gebildet ist, wobei
die stranggepressten hohlen Formelemente als Außenwände des Schienenwagenstrukturkörpers verwendet werden, wobei die einen Vorsprung aufweisende Fläche einer Innenseite des Wagenkörpers gegenüberliegt,
jedes Rührreibschweißen unterzogene stranggepresste hohle Formelement (400, 500) aus zwei flachen Platten und Streben gebildet ist,
der Vorsprung (430, 530) an einem Verbindungsende wenigstens einer der zwei flachen Platten gebildet ist, wobei der Vorsprung (430, 530) von einer oberen Fläche der flachen Platten in eine Richtung hervorragt, von der ein Rührreibschweißwerkzeug (50) einzuführen ist,
**dadurch gekennzeichnet, dass** zwischen einer Seitenfläche des Vorsprungs und der oberen Fläche der flachen Platte ein aus einer Ellipse zusammengesetzter Verbindungsabschnitt gebildet ist.

5. Verbindungsstruktur zum Rührreibschweißen, das an einem Rührreibschweißen zu unterziehenden stranggepressten Formelement (100, 120) gebildet ist, wobei die Verbindungsstruktur aufweist
einen Vorsprung (110, 130), der von einer oberen Fläche des stranggepressten Formelements in eine Richtung hervorragt, von der ein Rührreibschweißwerkzeug einzuführen ist,
**gekennzeichnet durch** einen Verbindungsabschnitt, der zwischen einer Seitenfläche des Vorsprungs (110, 130) und der oberen Fläche des stranggepressten Formelements (100, 120) gebildet ist, wobei der Verbindungsabschnitt zusammengesetzt ist aus einem Bogen mit großer Krümmung (R3), der in der Nähe der oberen Fläche des stranggepressten Formelements gebildet ist, und einem Bogen mit kleiner Krümmung (R2), die kleiner ist als die große Krümmung, der in der Nähe der Seitenfläche des Vorsprungs gebildet ist.

6. Verbindungsstruktur zum Rührreibschweißen, die an Enden von Rührreibschweißen zu unterziehenden stranggepressten Formelementen (200, 220) angeordnet sind, wobei die Verbindungsstruktur aufweist
einen Vorsprung (210, 230), der von einer oberen Fläche des stranggepressten Formelements (200, 220) in eine Richtung hervorragt, von der ein Rührreibschweißwerkzeug einzuführen ist,
**gekennzeichnet durch** einen aus einer Ellipse zusammengesetzten Verbindungsabschnitt, der zwischen einer Seitenfläche des Vorsprungs (210, 230) und der oberen Fläche des stranggepressten Formelements (200, 220) gebildet ist.

7. Verbindungsstruktur zum Rührreibschweißen gemäß Anspruch 5 oder 6, wobei das stranggepresste Formelement. (110, 130) eine flache Platte ist.

8. Verbindungsstruktur zum Rührreibschweißen gemäß Anspruch 5 oder 6, wobei das stranggepresste Formelement (200, 220) ein hohles Formelement mit einer Struktur ist, in der zwei flache Platten über Streben verbunden sind.

9. Verbindungsstruktur zum Rührreibschweißen mit dem Verbindungsabschnitt gemäß Anspruch 5 oder 6, wobei das stranggepresste Formelement (200, 220) ein hohles Formelement für einen Strukturkörper eines Wagens ist, der eine Struktur aufweist, in der zwei flache Platten über Streben verbunden sind.

## Revendications

1. Caisse structurelle d'un véhicule ferroviaire formée en assemblant une pluralité d'éléments de forme extrudés par un soudage par friction-malaxage, dans laquelle :
les éléments de forme extrudés (100, 120) sont utilisés comme panneaux extérieurs de la caisse structurelle d'un véhicule ferroviaire, la surface des éléments de forme extrudée ayant la saillie dirigée vers un côté intérieur de la caisse du véhicule,
chaque élément de forme extrudé (100, 120) soumis au soudage par friction-malaxage est formé d'un panneau plat et d'une nervure,
une saillie (110, 130) est formée à une extrémité d'assemblage du panneau plat, la saillie (110, 130) faisant saillie à partir d'une surface supérieure (102, 122) du panneau plat vers une direction à partir de laquelle un outil de soudage par friction-malaxage (50) doit être inséré, **caractérisé en ce que**
une partie de liaison est formée entre une surface latérale (112, 132) de la saillie (110, 130) et la surface supérieure du panneau plat, la partie de liaison étant composée d'un arc ayant une grande courbure (R3) formé près de la surface supérieure du panneau plat et d'un arc ayant une petite courbure (R2), laquelle est plus petite que la grande courbure, formé près de la surface latérale de la saillie.

2. Caisse structurelle d'un véhicule ferroviaire formée en assemblant une pluralité d'éléments de forme extrudés par un soudage par friction-malaxage, dans lequel :
les éléments de forme extrudés sont utilisés comme panneaux extérieurs de la caisse structurelle d'un véhicule ferroviaire, la surface des éléments de forme extrudés ayant la saillie dirigée vers un côté intérieur de la caisse du véhicule,
chaque élément de forme extrudé (200, 220) soumis au soudage par friction-malaxage est formé d'un panneau plat et d'une nervure,
une saillie (210, 230) est formée à une extrémité d'assemblage du panneau plat, la saillie (210, 230) faisant saillie à partir d'une surface supérieure du panneau plat vers une direction à partir de laquelle un outil de soudage par friction-malaxage (50) doit être inséré, **caractérisé en ce que**
une partie de liaison est formée entre une surface latérale (212, 232) de la saillie (210, 230) et la surface supérieure du panneau plat, la partie de liaison étant composée d'une ellipse.

3. Caisse structurelle d'un véhicule ferroviaire formée en assemblant une pluralité d'éléments de forme creux extrudés par un soudage par friction-malaxage, dans lequel :
les éléments de forme creux extrudés sont utilisés comme panneaux extérieurs de la caisse structurelle d'un véhicule ferroviaire, la surface ayant la saillie dirigée vers un côté intérieur de la caisse du véhicule,
chaque élément de forme creux extrudé (400, 500) soumis au soudage par friction-malaxage est formé de deux panneaux plats et d'entretoises,
une saillie (430, 530) est formée à une extrémité d'assemblage d'au moins un des deux panneaux plats, la saillie (430, 530) faisant saillie à partir d'une surface supérieure du panneau plat vers une direction à partir de laquelle un outil de soudage par friction-malaxage (50) doit être inséré, **caractérisé en ce que**
une partie de liaison est formée entre une surface latérale de la saillie et la surface supérieure du panneau plat, la partie de liaison étant composée d'un arc ayant une grande courbure (R3) formé près de la surface supérieure du panneau plat et d'un arc ayant une petite courbure (R2), laquelle est plus petite que la grande courbure, formé près de la surface latérale de la saillie.

4. Caisse structurelle d'un véhicule ferroviaire formé en assemblant une pluralité d'éléments de forme creux extrudés par un soudage par friction-malaxage, dans lequel :
les éléments de forme creux extrudés sont utilisés comme panneaux extérieurs de la caisse structurelle d'un véhicule ferroviaire, la surface ayant la saillie dirigée vers un côté intérieur de la caisse du véhicule,
chaque élément de forme creux extrudé (400, 500) soumis au soudage par friction-malaxage est formé de deux panneaux plats et d'entretoises,
une saillie (430, 530) est formé à une extrémité d'assemblage d'au moins un des deux panneaux plats, la saillie (430, 530) faisant saillie à partir d'une surface supérieure du panneau plat vers une direction à partir de laquelle un outil de soudage par friction-malaxage (50) doit être inséré, **caractérisé en ce que**
une partie de liaison est formée entre une surface latérale de la saillie et la surface supérieure du panneau plat, la partie de liaison étant composée d'une ellipse.

5. Structure de joint pour un soudage par friction-malaxage formée à une extrémité d'un élément de forme extrudé (100, 120) devant être soumis à un soudage par friction-malaxage, la structure de joint comportant :
une saillie (110, 130) faisant saillie à partir d'une surface supérieure de l'élément de forme extrudé vers une direction à partir de laquelle un outil de soudage par friction-malaxage doit être inséré, et **caractérisée en ce que**
une partie de liaison est formée entre une surface latérale de la saillie (110, 130) et la surface supérieure de l'élément de forme extrudé (100, 120), la partie de liaison étant composée d'un arc ayant une grande courbure (R3) formé près de la surface supérieure de l'élément de forme extrudé et d'un arc ayant une petite courbure (R2), laquelle est plus petite que la grande courbure, formé près de la surface latérale de la saillie.

6. Structure de joint pour un soudage par friction-malaxage disposée à des extrémités d'éléments de forme extrudés (200, 220) devant être soumis à un soudage par friction-malaxage, la structure de joint comportant :
une saillie (210, 230) faisant saillie à partir d'une surface supérieure de l'élément de forme extrudé (200, 220) vers une direction à partir de laquelle un outil de soudage par friction-malaxage doit être inséré, et **caractérisée en ce que**
une partie de liaison est formée entre une surface latérale de la saillie (210, 230) et la surface supérieure de l'élément de forme extrudée (200, 220), la partie de liaison étant composée d'une ellipse.

7. Structure de joint pour un soudage par friction-malaxage selon la revendication 5 ou la revendication 6, dans laquelle l'élément de forme extrudé (110, 130) est un panneau plat.

8. Structure de joint pour un soudage par friction-malaxage selon la revendication 5 ou la revendication 6, dans laquelle l'élément de forme extrudé (200, 220) est un élément de forme creux ayant une structure dans laquelle deux panneaux plats sont reliés par des entretoises.

9. Structure de joint pour un soudage par friction-malaxage ayant la partie de liaison selon la revendication 5 ou la revendication 6, dans laquelle l'élément de forme extrudé (200, 220) est un élément de forme creux pour une caisse structurelle d'un véhicule ayant une structure dans laquelle deux panneaux plats sont reliés par des entretoises.
